# EUROPEAN PATENT APPLICATION

(11) **EP 3 406 571 A1**
(43) Date of publication of application: **28.11.2018**
(21) Application number: 18154288.7
(22) Date of filing: 30.01.2018
(51) Int. Cl.: C02F 3/12, C02F 3/08, C02F 3/30, E03F 5/10

(54) **A SEPTIC TANK ENHANCEMENT APPARATUS**

(30) Priority: 01.02.2017 GB 201701648
(71) Applicant: Iska Water Treatments Limited, Athione, Co Westmeath (IE)
(72) Inventor: SCOULER, John, Athlone, Co Westmeath (IE)
(74) Representative: Tomkins & Co

(57) **Abstract**

The present application is directed towards an enhancement apparatus which improves the function of a pre-existing septic tank system.

## Description

### Field of Invention

The present application is directed towards a secondary treatment system which eliminates known problems which exist in existing one and two chamber septic tank systems. These existing one and two chamber septic tank systems are still the most common septic tank systems in operation throughout Europe.

### Background to Invention

It is commonly known that about one third of all houses in Europe (and other developed countries) rely on an individual domestic septic tank system to collect, treat and discharge their household waste water. Household waste water emanates from a number of sources comprising one or more of toilet(s), sink(s), shower(s), dishwasher(s) and other sources. These septic tank systems are usually located on or adjacent to property associated with a user's house. When working properly, septic tank systems should be an effective means of protecting public health and water quality. Houses with a domestic septic tank system are typically rural based dwellings, rather than houses in built up areas having access to a municipal sewer and treatment plant. However, there are also houses in urban and suburban areas that rely on an associated septic tank systems to treat their waste water.

A septic tank typically consists of one or more concrete or plastic tanks of between 4000 and 7500 litres (1,000 and 2,000 gallons). Typically one end of the septic tank is connected to an inlet waste water pipe. Typically the opposite end of the septic tank is connected to a septic drain field by an outlet. The septic drain field provides percolation areas which facilitate subsurface waste water disposal and are used to remove contaminants and impurities from the liquid that emerges after anaerobic digestion in a septic tank.

Common existing one or two chamber septic tank systems are proving in great numbers to be not fit for purpose. This has been highlighted following a European Court of Justice ruling for non-compliance of the Republic of Ireland in regards to certain aspects of the European wastewater directive. As a result of this ruling, the Republic of Ireland introduced a mandatory registration and inspection for all septic tank systems.

At present, 48% of septic tank systems which have been registered and inspected have failed the inspection. The majority of failures involve the common existing one or two chamber septic tank systems. This has highlighted particular consequential problems within percolation areas. Detailed reports prove that one and two chamber septic tank systems are prone to sending soupy liquid, raw sludge and at times, solids, direct to percolation areas, resulting in full or partial blockage of the connection between the septic tank and portions of the septic drain field.

In many cases, this results in other portions of the septic drain field becoming overloaded. This in turn results in insufficiently and / or untreated effluent escaping the septic drain field and entering water courses with severe consequential damage to the environment, public health, and water quality. Further, a full or partial blockage of the connection between the septic tank and portions of the septic drain field can prevent the septic tank emptying into the septic drain field correctly. This can cause a backup of waste water in the septic tank. This in turn can result in a backup of waste water occurring within in toilets and drains, which at times, can cause human excrement to be deposited on lawns or other external surfaces.

If, as would be expected, the efficiency of existing septic tanks in Ireland is replicated by septic tanks across the rest of Europe, it follows that billions of litres of insufficiently treated and / or untreated effluent is being discharged to various water courses annually.

As a result, there is a desire for a cost effective septic tank enhancement apparatus to be brought to market that rectifies in a new manner the aforementioned problems.

### Statement of Invention

The present application is directed towards an apparatus for use with a pre-existing septic tank, the features of which are set out in the appended claims. The following statements are intended as an introduction to the subject matter set out below in the detailed description, and neither these statements, nor the detailed description should be held as limiting the scope of the present disclosure which is, instead, as defined by the appended claims.

In one embodiment, the apparatus comprises a means for extracting waste water from the pre-existing septic tank to a body remote from the pre-existing septic tank, wherein the body is configured to treat the waste water to reduce the contaminates in the waste water; and a means for discharging treated water from the apparatus to a septic drain field associated with the pre-existing septic tank.

Preferably, the means for extracting waste water extracts a set volume of waste water periodically. More preferably, the means for extracting waste water is operatively connected to a control unit, the control unit adapted to control the means for extracting waste water. Ideally, the control unit is configurable to adjust the set volume of waste extracted from the pre-existing septic tank to the body remote body whereby a user can adjust the volume of waste water extracted for treatment by the apparatus; and/or the control unit is configurable to adjust a length of time between successive periodic extractions of waste water from the pre-existing septic tank, whereby a user can adjust the period of treatment of the set volume of extracted waste water

Preferably, the body comprises an aeration chamber for oxygenating the waste water. Preferably, a floating object is located in the aeration chamber, wherein the floating object has a surface for encouraging bacterial growth when the floating object is floating in the aerated waste water in the aeration chamber. Preferably, the floating object is shaped such that in use oxygen escaping waste water in the aeration chamber causes the floating object to rotate.

Preferably, the apparatus comprises one or a plurality of air diffusers located at the bottom of the aeration chamber. More preferably, the one or plurality of air diffusers are connected to a compressor, wherein the compressor provides atmospheric air to the one or plurality of air diffusers. Optionally, the control unit is operatively connected to the compressor and is configurable to adjust the volume of air provided to the one or plurality of air diffusers. Preferably, the aeration chamber comprises means for collecting air which has passed through waste water for re-use.

In one embodiment, the body comprises a settlement chamber to receive aerated water from the aeration chamber, wherein the settlement chamber allows particles suspended in the aerated waste water to separate from the waste water under gravity. Preferably, the settlement chamber comprises a sloped plate, said plate having a surface along which water entering the settlement chamber flows.

Preferably, water extracted from the pre-existing septic tank displaces aerated water from the aeration chamber into the settlement chamber and aerated water displaces treated water from the settlement chamber to the septic drain field associated with the pre-existing septic tank. Preferably, the capacity of the body is below 1000 litres, preferably below 700 litres, and more preferably below 600 litres.

In one embodiment, the means for extracting waste water is a pump. Preferably, the pump is located within the interior of the pump unit at a lower end of the pump unit. More preferably, the walls of the pump unit comprises one or a plurality of openings to allow the ingress of waste water from the existing septic tank to the interior of the pump unit for pumping, wherein the openings are further dimensioned to reduce fouling of the pump. Preferably, a greater number of openings are located at the end of the pump unit adjacent the pump than at the end of the pump unit remote from the pump.

Preferably, the body is an enclosed body.

### Brief Description of the Drawings

The aspect of the present disclosure will be clear from the following description, given as non-restrictive examples, with reference to the attached drawings wherein:
**Figure 1** shows a pump unit of the septic tank enhancement apparatus;
**Figure 2** shows the main body of septic tank enhancement apparatus; and
**Figure 3** shows an example of bio-media balls for use with a septic tank enhancement apparatus.

### Detailed Description

The septic tank enhancement apparatus extracts waste water from within a pre-existing septic tank system. The waste water can be extracted in specific quantities. The waste water can be extracted at specific frequencies. The waste water is then delivered to an enclosed aeration process. As a result, the extracted waste water can be aerated and processed in a focused way.

Advantageously, the septic tank enhancement apparatus described herein increases the 40% degrade of the pollutants biological oxygen demand (BOD), chemical oxygen demand (COD), and / or suspended solids (SS), normally expected from traditional one and two chamber septic tanks. The biological oxygen demand (also known as the biochemical oxygen demand) is the amount of dissolved oxygen required by aerobic biological organisms to break down organic material present in a given water sample at certain temperature over a specific time period. The BOD value is most commonly expressed in milligrams of oxygen consumed per litre of sample during 5 days of incubation at 20 °C and is also used (as in the present application) as a measure of organic pollution of water. The chemical oxygen demand is the standard measurement of the amount of pollution (that cannot be oxidized biologically) in a sample of water.

Indeed, an increase of over 100% can optionally be achieved, if required. The septic tank enhancement apparatus enables domestic wastewater to be treated to any given standard as may be required by a given national authority. In tests the enhancement apparatus has achieved a performance level where in excess of 90% of BOD, COD and SS contaminates were removed through biological degradation.

The fact that the septic tank enhancement apparatus allows the quantity of waste water extracted from a septic tank to be altered at will by the user results in a high standard of effluent treatment which may be adjusted as required to meet the use of the septic tank system. Further, the treatment period within the septic tank enhancement apparatus can alternatively be altered at will by the user to obtain a high standard of effluent treatment which may be adjusted as required to meet the use of the septic tank system. The quantity of waste water extracted and the treatment period can also be adjusted simultaneously.

The enhancement apparatus utilises a biological aerated filter (BAF) process, described below in more detail, to improve the performance of an existing septic tank which has been pre-installed.

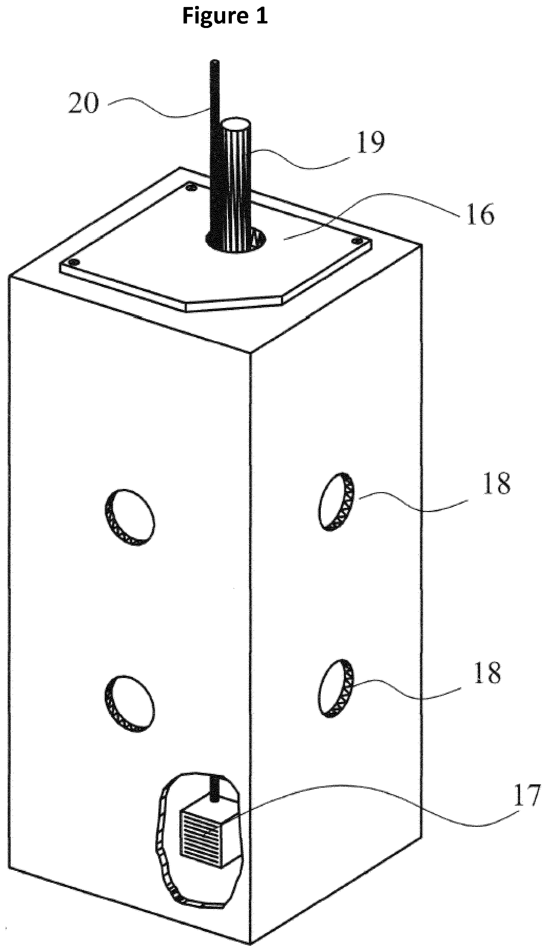

Figure 1 shows a pump unit which can be used to extract waste water from an existing septic tank and delivered to the main body of the septic tank enhancement apparatus. The pump unit is a factory assembled unit which will require minimal installation on site. The pump unit can be any available unit capable of pumping waste water. However, the pump unit is preferably a customized unit of unique design.

Preferably the pump unit is placed into the existing septic chamber. Alternatively, the pump unit may be remote from the septic tank and waste water may be drawn from the existing septic tank by the pump unit using a pipe or the like. Preferably, if the existing septic tank is a two chamber system the pump unit is placed in the chamber nearest the outlet to the septic drain field. Installation can be performed by simply lowering the pump unit into the existing septic tank. As a result, the installer need have no contact with the influent within the existing septic tank.

Preferably, the pump unit has a square cross section in the range of 200mm² - 400mm². Most preferably, the pump unit is 300mm² square. Preferably, the pump unit has a height in the range of 1 meter to 50 cm. Most preferably, the pumping unit has a height of 70 cm. The pump unit is preferably of lightweight construction, using materials such as aluminium or plastics for the body of the pump.

A pump 17 is located within the interior of the pump unit. Preferably, the pump 17 is located at the bottom end of the pump unit. The pump can be any suitable waste water pump presently available. The pump is for pumping waste water located within the pump unit to the main body of the septic tank enhancement apparatus. The head pressure required on the lift pump is low as the lift required to send waste water from the existing septic tank to the enhancement apparatus is generally 3m. The foot valve on the pump 17 is preferably a shuttle type valve.

On the walls of the pump unit are a plurality of openings 18 to allow the ingress of waste water from the existing septic tank to the interior of the pump unit for pumping. The openings are dimensioned to prevent an overly large solid (such as e.g. a portion of crust or personal hygiene products) entering the interior of the pump unit and fouling the impellor on the pump 17. By overly large solid it is meant a solid that is too large and which, as a result, cannot be pumped by the pump 17, i.e. a solid having dimensions which could block or damage the pump. Preferably, the openings 18 are dimensioned to prevent a spherical partial of having a dimeter greater than any value in the rage of 30mm - 20mm from entering the pump unit. Most preferably, the openings 18 are dimensioned to prevent a spherical partial of having a dimeter greater than 25mm from entering the pump unit. Ideally, the openings 18 are 25mm diameter drilled openings.

The openings 18 are provided such that there are a greater number of openings at the end of the pump unit adjacent the pump 17 than at the end of the pump unit remote from the pump 17. This is advantageous because, initially during instillation, the pump unit is full of air. On being lowered into the waste water in the existing septic tank, waste water will enter the interior of the pump unit more freely through the openings 18 at the end of the pump unit adjacent the pump 17. As a result, air will be forced to escape the pump unit through the openings 18 located remote from the pump 17. This, in combination with the weight of the pump 17, produces a self-righting effect which results in the pump unit being easily installable in a pumping position. As used herein, 'a pumping position' refers to an orientation of the pump which, in use, will result in the pump 17 correctly pumping waste water.

Access to the interior of the pump unit is by way of a removable top cover 16 held in position by a fastening means. Preferably, the fastening means is a screw or a plurality of screws. More preferably, the fastening means is three or four screws.

A tube 19 is used to connect the pump 17 to the main body of the septic tank enhancement apparatus. Preferably, the tube 19 has an internal diameter in the region of 15 - 25 mm. Most preferably the tube has an internal diameter of 20 mm. The tube 19 can be any length, but typically a length of 3 meters is sufficient to extract waste water from an existing below ground septic tank and provide the waste water to the main body of the enhancement apparatus, which is preferably located above ground level. Thus, the pipe should be longer than 3 meters. Preferably the tube 19 is a flexible tube. The tube is 19 is made of light plastic and suitable to be cut to a required length using hand tools on site during instillation as will be described below in more detail. The pump unit comprises an opening to allow the tube 19 to connect to the pump 17. Preferably the opening is located in the cover 16. To further ensure that the pump unit remains in a pumping position, the tube 19 can be slightly tensioned in use.

A power cable 20 is also connected to the pump 17. The power cable 20 is used to power and / or control the pump 17. The pump unit can comprise a separate opening to allow the power cable 20 to connect to the pump 17. However, it is preferable that the same opening is used for both the tube 19 and power cable 20.

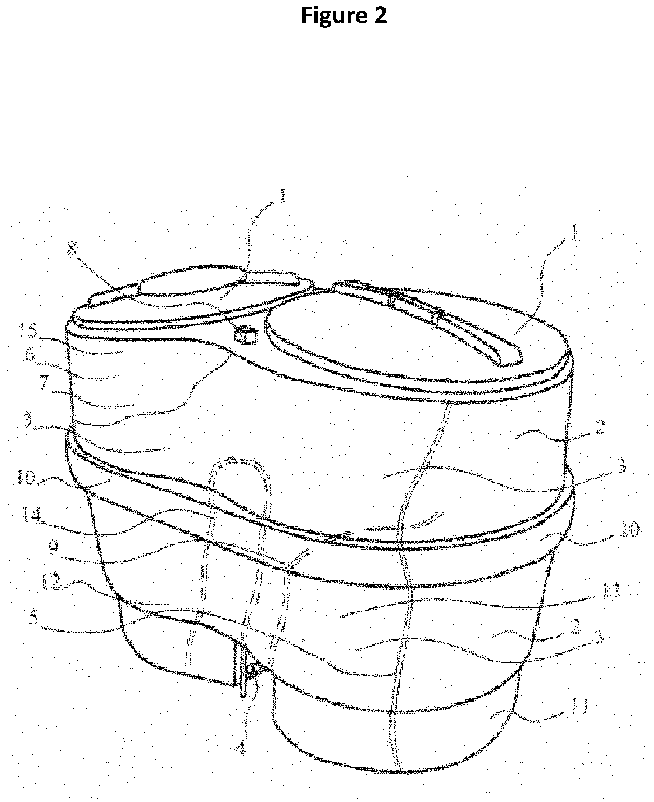

Figure 2 shows one preferred design of the main body of a septic tank enhancement apparatus (the main body). In use the tube 19 is connected is to an inlet pipe 14 of the main body. In use waste water enters an aeration chamber 3 in the main body from the inlet pipe 14. Thus, waste water is extracted from the septic tank and delivered to the bottom of the aeration chamber 3 in the main body.

A continuous supply of oxygen is provided to the aeration chamber to stimulate bacterial growth in the waste water. The quantity of bacterial growth is related to organic contaminates being removed from the waste water. Thus aeration is important to ensure a high standard of treatment.

A compressor 6 is provided to pump air through the waste water in the aeration chamber, thereby providing oxygen to the waste water. Preferably, the compressor 6 is located in a control box 15. Preferably, the compressor can operate continuously when connected to a continuous power supply, such as a normal domestic power supply system.

For optimal aeration of the waste water, air should pass evenly through the entire body of waste water in the aeration chamber 3. Preferably one or a plurality of air diffusers 12, placed at the bottom of the aeration chamber 3, are connected to the compressor 6 to facilitate the even distribution of air. Preferably, two diffusers 12 are used. Preferably, the compressor 6 and diffusers 12 are configured to supply a membrane type air bubble, such as fine or ultrafine bubbles, into the aeration chamber 3. A fine bubble typically has a diameter less than 50 µm. An ultrafine bubble typically has a diameter less than 0.5 µm

To achieve a performance level of 90% degrade in respect of BOD, the treatment duration time is 1 hour per 20 litres of waste water extracted from the existing septic tank. A minimal volume of 20 litres of oxygen (i.e. 90 - 100 litres of air) per hour is required to treat each 20 litres of waste water delivered.

In the event of the compressor 6 failing, a simple pressure valve (not shown) can be used to activate a warning light 8 on the exterior of the main body. Preferably, the warning light 8 is situated on top of the main body of the enhancement apparatus. Other warning means, such as an audible alarm of a wirelessly transmitted message to a personal computing device, such a mobile phone, computer, or tablet can be used instead of or in conjunction with the warning light 8.

In one aspect of the present disclosure, a control unit 7 is provided. The control unit 7 in operation controls the pump 17 of the pump unit. The control unit 7 may comprise a timer. The timer can be programmed to set on and off times for the pump 17. By controlling the length of time between when the pump 17 is turned on to the time the pump 17 is turned off, the volume of waste water entering the aeration chamber 3 can be controlled. Through controlling the time between when the pump 17 is turned off to time the pump 17 is turned on, the length time the waste water is being aerated and treated in the aeration chamber 3 is controlled. Thus, the programming of this timer uniquely facilitates the extraction and treatment period of pre-determined quantities of waste water from the existing septic tank. Further, the control unit can optionally be used to control the compressor 6. For example, the compressor can be turned off in periods of low use of the septic tank (e.g. when the user goes on holiday). In one embodiment, the control unit can be used to deactivate the compressor while the pump is active.

The control unit 7 can optionally comprise a user interface to allow a user or technician to control the pump 17 and/or the compressor 6. The user interface could also provide a user with information regarding the operation off the enhancement apparatus, and as such, the user interface can optionally be used to provide the warning means discussed above.

The control unit 7 can be situated in the control compartment 15. Alternatively, the control unit 7 can be located remote from the enhancement apparatus (e.g. inside a property) and can control the pump 17 through known communication means such as a wired connection or wireless connection.

In a further alternative, the user interface can be located remote from the remainder of the control unit 7 - for example the remainder of the control unit can be located in the control compartment 15 and the user interface provided remote from the enhancement apparatus. The user interface can communicate with the reminder of the control unit 7 through known communication means such as a wired connection or wireless connection. The user interface can optionally be provided by an app or other program for use with a personal computing device, such a mobile phone, computer, or tablet.

Thus, the control unit 7, which is user programmable, can be used to achieve a desired performance in respect of the degradation of contaminates in the waste water and / or the quantity of water water treated, through control of one or more of: quantity of waste water extracted, the duration of time the waste water is treated, or the volume of oxygen aerated through the waste water. As a result, the control unit can also be used to control quality of treated waste water entering the septic drainage field for percolation relative to the flow rate of waste water from the household associated with the existing septic tank.

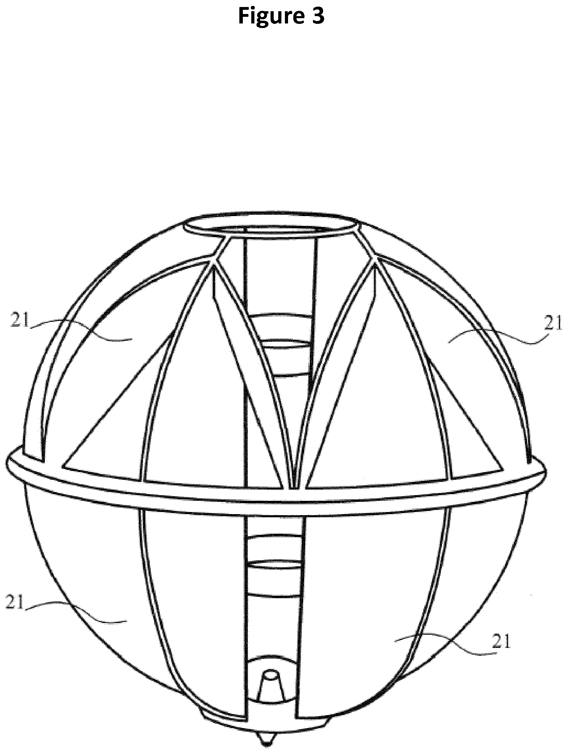

With reference to figure 3, preferably a plurality of specially designed bio-media balls are also provided. Preferably, the bio-media balls are located in the aeration chamber 3. The bio-media balls can be formed of any suitable material although plastic is preferably used. The plastic bio-media balls are designed to have a plurality of surfaces 21 of varying sizes and shapes. These surfaces maximise the surface area available for bacterial growth when immersed in the aerated waste water in the aeration chamber. The air provided into the aeration chamber will also accumulate on these surfaces, causing the bio-media balls to rotate in order to allow the air to escape the waste water. This ensures constant rotary movement of the media balls within the treatment chamber which increases bacteria growth.

Without the addition of the bio-media balls, bacteria would only grow on the surface of the waste water in the aeration chamber - i.e. the top layer of aerated waste water in contact with atmospheric air. The bio-media balls have the effect of increasing the 'effective' surface area of the waste water in the aeration chamber 3. As a result, the size of the main body of the enhancement apparatus can be greatly reduced without impacting on performance.

The outside diameter of the bio-media ball should be between 40mm - 70mm, but preferably 60mm. The bio-media balls should be under 15 grams, to facilitate floatation within the chamber. Further, the bio-media balls should have a density such that between 40 - 60%, but preferably 50%, of the volume of bio-media balls is submerged in the aerated waste water in use. The bio-media balls account for 10% to 20%, or preferably 15%, of the cubic capacity of the aeration chamber 3. Ideally the bio-media balls are configured to float freely on the surface of the waste water within the aeration chamber 3.

The bio-media balls can be provided installed with the enhancement apparatus or can be provided separately, for example as a spare part.

The bacterial growth on the bio-media balls results in a continuous degradation of contaminates in the waste water in the aeration chamber 3.

After a predetermined period set using the control unit 7 and / or the timer, the pump is turned on, thereby drawing a set volume of waste water from the septic tank to the bottom of the aeration chamber 3. The flow of the set volume waste water into the aeration chamber 3 upwardly displaces any aerated waste water that may be present in the aeration chamber. When the aeration chamber 3 is full, the flow of the set volume waste water into the aeration chamber 3 causes a matching set volume of aerated waste water to exit the aeration chamber over a wall 5 into a settlement chamber 2.

Although some mixing will occur at the interface between the aerated waste water and the non-aerated waste water being drawn into the bottom of the aeration chamber 3 from the septic tank, the volume of waste water drawn from the septic tank can be limited such that the boundary layer (i.e. the region where mixing occurs) between the aerated waste water and the non-aerated waste water being drawn from the septic tank remains remote from the top of wall 5, thereby preventing the flow of non-aerated waste water into the settlement chamber. In one embodiment, the volume of waste water a user can draw into the aeration chamber is limited setting a maximum time for running the pump 17. This can be achieved by designing the control unit 7 such that it will not accept the input of a pumping time greater than a predetermined threshold. As noted above, the compressor can optionally be deactivated in one embodiment to reduce mixing caused by the air bubbles, thereby reducing the size of the boundary layer.

The settlement chamber 2 is provided to allow particles suspended in the aerated waste water to separate from the waste water under gravity. As such the settlement chamber 2 functions substantially as a conventional settlement chamber.

The settlement chamber 2 comprises a plate (not shown) having a surface and a top and a bottom. The top of the plate is positioned such that the plate, or at least a portion of the top plate, is located adjacent the top of wall 5. The plate is sloped downwards from the top of the wall 5 to the bottom of the plate. Thus, in use aerated waste water flowing over the wall 5 will flow from the top of the plate down the plate towards the base of the plate. It has surprisingly been found that such a plate increases the speed at which particles settle within the settlement chamber. It is believed that when fluid is flowing down such a plate, particles in the boundary layer of waste water adjacent the plate 'clump' or conglomerate together forming larger particles. These larger particles settle out of the waste water more quickly than particles in prior art systems. As a result, the size of the settlement tank can be reduced through using a sloped plate with no reduction in performance. In one embodiment the slope from the top of the plate to the base of the plate has a gradient of between 50% - 70% with respect to the base. Preferably the slope from the top of the plate to the base of the plate has a gradient of 60% with respect to the base.

Preferably, the plate is curved and the gradient of the plate gradually decreases as the plate approaches the base, the base of the plate being horizontal to the base of the settlement chamber. This has the advantage of reducing turbulence at the base of the plate. It is important to reduce the turbulence at the base of the plate because excessive turbulence at the base of the plate will mix particles back into the waste water in the settlement chamber. Preferably the plate is curved with a curve matching a surface of a hemisphere or a surface of half of an ellipsoid as split by a plane bisecting the two smallest axes of the ellipsoid such that the plate has a U-shaped vertical cross section. An advantage of such a bowl shaped plate having a U-shaped cross section is that it facilitates the collection of settled particles which accumulate at the base of the plate.

Preferable, the surface of the plate which engages with the waste water is configured to reduce the likelihood of particles sticking to the plate. For example, the plate can be provided with a Teflon™ surface or a friction reducing coating. In addition the surface of the plate is preferably smoothed to avoid providing a plate with a rough surface upon which particles can bind.

Further, preferably the surface of the plate may comprises dimples with further enhance the boundary layer effects outlined above.

As discussed above, after the predetermined period, the set volume of aerated waste water is displaced from the aeration chamber 3 into the settlement chamber 2 over the top of wall 5. This water flows down the plate. This in turn causes an upward displacement of any treated waste water present in the settlement chamber 2. When the settlement tank if full, the set volume of aerated water entering the settlement chamber 2 causes the discharge of a matching set volume of treated water from the settlement chamber. The treated waste water exits the settlement chamber 2 via an upper end of a discharge pipe 9 which is located remote from and below the top of wall 5. In a preferred embodiment having a plate with a U-shaped cross section, the upper end of discharge pipe 9 is preferably located above the bottom of the plate. The treated waste water is discharged via the outlet pipe 9, preferably using gravity.

Preferably, the outlet pipe 9 is connected to the septic drain field. This can be done by connecting any suitable pipe from a lower end of the outlet pipe 9 to the distribution box of the pre-existing septic tank. The distribution box is the part of a typical septic tank used to evenly output waste water from the septic tank throughout the septic drain field. Alternatively, the lower end of the outlet pipe 9 is connected to the outflow pipe connecting the septic tank to the septic drain field. Preferably, the outlet pipe 9 is connected to the outflow pipe of the septic tank at a distance from the septic tank at a distance which reduces the risk of treated water flowing back into the septic tank. In a further alternative, the lower end of the outlet pipe 9 can be connected by any suitable pipe to provide the treated waste water back into the pre-existing septic tank. Preferably, the treated waste water is provided to the back into the existing septic tank adjacent to the outlet from the pre-existing septic tank to its associated distribution box to facilitate exit of treated waste water from the pre-existing septic tank and the even distribution of the treated waste water throughout the septic drain field.

Thus, if for example the control unit is set so the enhancement apparatus treats 20 litres per hour, during pumping, 20 litres of waste water will enter the bottom of the aeration chamber 3. If the aeration chamber 3 is full, the 20 litres of waste water will displace 20 litres of aerated water into the settlement chamber 2. If the settlement chamber 2 is full, the 20 litres of aerated water will cause 20 litres of treated water to be discharged to the septic drain field. However, as noted above one advantage of the present application is that the set volume and the treatment time can be adjusted by a user.

A valve or other means may be provided to allow easy sampling of the output from the enhancement apparatus. This allows the output to be easily monitored by the householder and facilitates taking samples for lab analysis, if required.

Treated waste water emanating from the enhancement apparatus for percolation in the septic drain field will be consistently clear and devoid of any sludge or solids which allows even challenged exiting percolation areas to continue to function within legally required tolerances. In the majority of cases, this eliminates the necessity to dig up and replace the septic drainage field. Further, though the use of the BAF process described above, the use of chemicals can be avoided. The ability to tailor the BAF process results in the enhancement apparatus is being substantially odour free.

The main body of the enhancement apparatus (referred to below as the main body) and the associated pump unit (as shown in figure 1) is preferably manufactured from rotationally moulded plastic. However, the main body can vary in construction and alternatively be one of round, box or rectangular in shape.

The main body is lightweight, in particular the domestic version when empty will weigh less than 100kg, and preferably less than 50kg. A weight of 45kg or less is preferred. A lightweight design enables the main body to be easily moved and placed above and adjacent to an existing septic tank. As a result of the aspects discussed above, the capacity required to process waste water can be significantly reduced. As a result, the apparatus is also small. Thus the capacity of the enhancement unit can be below 1000 litres, preferably below 700 litres, and more preferably below 600 litres.

As a result of its size and weight, the main body can, when empty, be easily moved on site. One individual can place the apparatus into the desired position.

Further, as a result of the control mechanism described above, the volume of waste water treated and the degree of treatment can be controlled by a user to match flow rate of waste water emanating from the domestic household into the septic tank. This flow rate can vary for example depending on how many people are present in the house amongst.

The main body of the enhancement apparatus is preferably robust because in operation the main body will weigh some 500kg or over depending on the capacity of the enhancement apparatus, due to the waste water being processed within the enhancement apparatus. In one embodiment, a strength band 10 surrounds the outside middle of the main body, to prevent the main body from bursting. Additionally or alternatively, a re-enforced base 11 is provided which contributes to the strength of the main body. The use of both the strength band 10 and the re-enforced base 11 is preferable so as to maximize the strength of the unit at minimal cost in terms of the weight of the main body.

One, or a plurality of, access lids 1 are also provided. In a preferred embodiment two access lids 1 are provided on the top of the main body. The lids 1 are preferable threaded and engage with corresponding threads in the main body. The lids 1 preferably can be removed through unscrewing in an anti-clockwise direction. As a safety measure, the lids 1 are in use preferably locked in place with tamper proof screws.

Preferably the lids 1 account for 90% of the top surface area of the main body. This allows complete ease of access to any component located within the main body, within arm's reach, to facilitate maintenance or any other requirement.

The main body is also provided with a bung which can be opened to drain the aeration chamber 3 and the settlement chamber 2, for example prior to a service. Alternatively, a removable bung can be used.

The main body is primarily designed for above the ground installation with the option of recessing the apparatus up to 300mm into the ground. Due to its light weight construction, the main body can be easily moved using a trolley or dragged on a skid. The system is specifically designed for installation where the customer either does not have the option or wishes to avoid the use of machinery during installation. The unit is designed where necessary to allow the complete installation using only simple hand tools and so avoids disruption to the environment (e.g. a user's garden) resulting from the use of heavy machinery.

Inlet 14 and outlet 9 connections are preferably clearly labelled and visible to facilitate correct connection.

Instillation of the enhancement apparatus merely requires the pump unit to be lowered into an existing septic tank as described above. A single opening needs to be drilled or otherwise provided in the wall or access panel / lid of an existing septic tank to allow the tube 19 and power cable 20 to connect the pump unit to the main body.

A further opening needs to be provided in the wall of the existing septic tank or preferably in the distribution box of the existing septic tank to allow treated waste water from the enhancement apparatus to enter the septic drainage field.

A practitioner skilled in the art will recognise that the exemplary aspects of the present disclosure described above can be altered without departing from the scope of the appended claims. For example, the enhancement apparatus has been described above as having a main body which is located above ground and separate to an existing septic tank. The main body of the enhancement apparatus can alternatively be configured or designed to be fitted into the septic tank chamber of an existing septic tank.

In another embodiment, main bodies of the enhancement apparatus can be arranged in a modular fashion. Any plurality of main bodies can be connected in series, (i.e. a series of n main bodies, each main body number from x = 1 to n, where n is any number greater than one) by connecting the lower end of outlet pipe 9 of a main body in the series (x) to inlet pipe 14 of the next main body in the series (x+1) for further aeration and treatment in the second main body. The lower end of the outlet pipe 9 of the last main body in the series (n) can be connected by any suitable pipe to provide the treated waste water back into the existing septic tank.

In a further embodiment, a plurality of aeration chambers 3 can be arranged in a modular fashion. Any plurality of aeration chambers can be connected in series, (i.e. a series of n aeration chambers, each aeration chamber x numbered from x = 1 to n, where n is any number greater than one) by allowing aerated waste water displaced during pumping to overflow from an aeration chamber 3 in the series (x) into the next aeration chamber in the series (x+1) for further aeration. The aerated waste water displaced in the last aeration main body in the series (n) can be connected by any suitable pipe to provide the treated waste water back into the existing septic tank.

In all embodiments, air exiting the waste water in an aeration chamber can be optionally captured and passed back through the one or a plurality of air diffusers 12 of the aeration chamber, or alternately in the case of a modular design the captured air from one aeration chamber can be passed to the one or a plurality of air diffusers 12 of the next aeration chamber in the series of main bodies or aeration chambers.

## Claims

1. An apparatus for use with a pre-existing septic tank, the apparatus comprising:
a means for extracting waste water from the pre-existing septic tank to a body remote from the pre-existing septic tank, wherein the body is configured to treat the waste water to reduce the contaminates in the waste water; and
a means for discharging treated water from the apparatus to a septic drain field associated with the pre-existing septic tank.

2. The apparatus of claim 1, wherein the means for extracting waste water extracts a set volume of waste water periodically.

3. The apparatus of claim 2, wherein the means for extracting waste water is operatively connected to a control unit, the control unit adapted to control the means for extracting waste water.

4. The apparatus of claim 3, wherein:
the control unit is configurable to adjust the set volume of waste extracted from the pre-existing septic tank to the body remote body whereby a user can adjust the volume of waste water extracted for treatment by the apparatus; and / or
the control unit is configurable to adjust a length of time between successive periodic extractions of waste water from the pre-existing septic tank, whereby a user can adjust the period of treatment of the set volume of extracted waste water.

5. The apparatus of any preceding claim, wherein the body comprises an aeration chamber for oxygenating the waste water.

6. The apparatus of claim 5, comprising a floating object located in the aeration chamber, wherein the floating object has a surface for encouraging bacterial growth when the floating object is floating in the aerated waste water in the aeration chamber.

7. The apparatus of claim 6, wherein the floating object is shaped such that in use oxygen escaping waste water in the aeration chamber causes the floating object to rotate.

8. The apparatus of any one of claims 5 to 7, wherein the apparatus comprises one or a plurality of air diffusers located at the bottom of the aeration chamber.

9. The apparatus of claim 8, wherein the one or plurality of air diffusers are connected to a compressor, wherein the compressor provides atmospheric air to the one or plurality of air diffusers.

10. The apparatus of claim 9 when dependent upon claim 4, wherein the control unit is operatively connected to the compressor and is configurable to adjust the volume of air provided to the one or plurality of air diffusers.

11. The apparatus of any one of claims 5 to 10, wherein the aeration chamber comprises means for collecting air which has passed through waste water for re-use.

12. The apparatus of any one of claims 5 to 9, wherein the body comprises a settlement chamber to receive aerated water from the aeration chamber, wherein the settlement chamber allows particles suspended in the aerated waste water to separate from the waste water under gravity.

13. The apparatus of claim 12, wherein the settlement chamber comprises a sloped plate, said plate having a surface along which water entering the settlement chamber flows.

14. The apparatus of claim 12 or 13, wherein water extracted from the pre-existing septic tank displaces aerated water from the aeration chamber into the settlement chamber and aerated water displaces treated water from the settlement chamber to the septic drain field associated with the pre-existing septic tank.

15. The apparatus of any preceding claim wherein the capacity of the body is below 1000 litres, preferably below 700 litres, and more preferably below 600 litres

16. The apparatus of any preceding claim, wherein the means for extracting waste water is a pump.

17. The apparatus of claim 16, wherein the pump is located within the interior of the pump unit at a lower end of the pump unit.

18. The apparatus of claim 17, wherein the walls of the pump unit comprises one or a plurality of openings to allow the ingress of waste water from the existing septic tank to the interior of the pump unit for pumping, wherein the openings are further dimensioned to reduce fouling of the pump.

19. The apparatus of claim 18, wherein a greater number of openings are located at the end of the pump unit adjacent the pump than at the end of the pump unit remote from the pump.

20. The apparatus of any preceding claim, wherein the body is an enclosed body.
